# EUROPEAN PATENT SPECIFICATION

(11) **EP 2 586 905 B1**
(45) Date of publication and mention of the grant of the patent: **22.07.2020**
(21) Application number: 11186568.9
(22) Date of filing: 25.10.2011
(51) Int. Cl.: D06F 58/20, D06F 58/32

(54) **A laundry dryer with a heat pump system**
Wäschetrockner mit Wärmepumpensystem
Sèche-linge avec système de pompe à chaleur

(43) Date of publication of application: 01.05.2013
(73) Proprietor: Electrolux Home Products Corporation N.V., 1130 Brussels (BE)
(72) Inventor: Bison, Alberto, 33080 Porcia (PN) (IT); Cavarretta, Francesco, 33080 Porcia (PN) (IT)
(74) Representative: Electrolux Group Patents

(56) References cited:
- EP-B1- 2 171 150
- WO-A2-2011/072999
- DE-A1- 19 638 865
- DE-C1- 10 255 575
- JP-A- H02 290 471
- JP-A- 2006 087 484
- JP-A- 2009 034 306
- JP-A- 2010 033 508
- US-A1- 2005 217 133
- US-A1- 2007 151 267
- US-A1- 2008 235 977

## Description

The present invention relates to a laundry dryer with a heat pump system according to the preamble of claim 1.

A laundry dryer with a heat pump system is an efficient way to dry laundry by low energy consumption. In a conventional heat pump laundry dryer an air stream flows in a closed air stream circuit. The air stream is moved by a fan, passes through a laundry drum, removes water from wet laundry, is then cooled down and dehumidified in an evaporator, heated up in a condenser and at last re-inserted into the laundry drum again. The refrigerant instead is compressed by a compressor, condensed in the condenser, laminated in expansion means and then vaporized in the evaporator.

The lamination work at the expansion means depends substantially on the geometric properties of said expansion means and on the refrigerant flow rate. When the expansion means is a fixed mechanical element, e.g. a capillary tube, the lamination work cannot be adapted to the pressure of the refrigerant or to the rotational speed of the compressor. For example, particularly in a heat pump system having a compressor with fixed output, the lamination work generated by the expansions means during the warm-up phase of the heat pump system should differ from the lamination work generated by the expansions means during the steady state phase of the heat pump system for optimizing the efficiency of the heat pump system. At the beginning of the warm-up phase the temperature of the refrigerant has ambient values and the pressure corresponds to this temperature ambient values. At the end of said warm-up phase the temperature and pressure of the refrigerant reach their operation values. The refrigerant flow rate that flow through the expansion means changes from warm-up phase to steady state phase.

In case of compressor with variable output, a higher rotational speed of the compressor requires a certain lamination work, while a lower rotational speed of the compressor requires a lamination work different from the one for higher rotational speed.

However, the capillary tube can limit the advantage of the variable speed of the compressor. In particular, if the rotational speed is increased in order to run a predetermined drying cycle, e.g. a fast cycle, then the capillary tube can lead to a decrease of the heat pump performance and prevents the expected advantages. In fact, the increase of the rotational speed of the compressor is performed in order to increase the mass flow rate of the refrigerant. This allows more exchange of energy with the air stream and shortens the drying cycle. However, the mass flow rate increases, if the density condition of the refrigerant at the inlet of the compressor does not change, while changing from the low speed condition to the high speed condition. The mass flow rate is determined by the formula M = r V n, wherein r is the refrigerant density at suction condition, V is the volume of refrigerant elaborated during a single rotation of the compressor and n is the rotational speed of the compressor. It appears clear that if the rotational speed n increases and the refrigerant density r keep constant, the mass flow rate M is increased, too. This effect is beneficial for the drying time.

However, this change of the rotational speed n of the compressor is badly matched with the lack of flexibility given by the capillary tube optimized for a lower compressor rotational speed. In this case, the capillary tube will create a pressure drop to the refrigerant, which is too high. As a consequence the evaporation pressure and the density r will decrease. Then, the value of the mass flow rate M could not increase by the increased rotational speed n. This is a disadvantage, since the compressor input power is in any case increased due to the requested higher pressure ratio.

EP 2171150 discloses a washer/dryer according to the preamble of the independent claim 1. This known washer/dryer can operate at low energy, fast drying and hygienic drying modes by maintaining different levels of pressure and temperature decreases of the refrigerant fluid between the condenser and the evaporator by means of using a valve and at least two throttle elements between the condenser and the evaporator.

WO 2011/072999 discloses a laundry dryer comprising a heat pump, wherein the expansion system has a variable restriction which may be controllable by a control unit in response to signals from a sensor unit.

DE 102 55 575 discloses a laundry dryer has a closed process loop in which warm air is supplied to the drying chamber via an air inlet and extracted via an air outlet, supplying it to a heat exchanger for moisture removal, before re-heating and recirculation via a fan. An evaporator and a condenser for the heat pump circuit are contained in the warm air process loop, the evaporator incorporated in the heat exchanger and the condenser in the heating device, the evaporator having parallel heat exchange surfaces, with separate regulation of the cooling medium flow fed to each.

US 2008/235977 discloses a laundry washing/drying machine involving drying by a heat pump cycle device for performing a cycle of radiating, with use of a radiator, the heat of a refrigerant compressed by a compressor, passing the refrigerant through a pressure reducing/expansion valve, evaporating the refrigerant in an evaporator and compressing the refrigerant again by the compressor, an air circulation path for allowing air to be circulated by a blower.

DE 196 38 865 discloses a condensation laundry dryer has a closed process air circulation system and a cooling agent circulation in which the medium is circulated in a system with an evaporator, a compressor, a liquefier and a throttle component. The cooling medium supply is controlled via the throttle component in accordance with the temperature registered by a measuring device located on the cooling medium line between the evaporator and the compressor.

US 2005/217133 discloses a drying apparatus comprising a heat pump apparatus in which a refrigerant circulates through a compressor, a radiator, a throttle apparatus and an evaporator in this order, wherein the drying apparatus further comprises compressor input detecting means for detecting input of the compressor, and cooling quantity control means for controlling a cooling quantity of the cooling apparatus using a value detected by the compressor input detecting means.

JP 2009 034306 A discloses a heat pump laundry dryer with expansion means comprising two switchable capillary tubes. The capillary tubes are switched on/off by means of a valve, which controlled via a bimetal temperature switch detecting the drying air temperature or ambient air temperature.

US 2007/151267 A1 discloses a variable capacity air conditioner with a heat pump system, which may be applicable to a dryer. The heat pump comprises a variable expansion means with two serially connected capillary tubes, a bypass pipe is connected to one capillary tube and a valve for opening and closing the bypass pipe. The voltage or current supplied to a compressor motor is detected and depending on the value of detected voltage/current the valve is controlled to close or open the bypass pipe.

JP 2006 087484 A discloses a washer-dryer with a heat pump system comprising a variable expansion means with two capillary tubes connected in parallel. Via a three-way valve one of the capillary tubes is used during a start-up phase of a drying cycle and the other capillary tube is used during a steady state phase.

JP 20103508 A discloses a vending machine with a heat pump system comprising a variable expansion means with two capillary tubes. When a compressor is started, the capillary whose fluid resistance is small is used, and when the compressor is stabilized, the capillary whose fluid resistance is large is used.

JP H02 290471 A discloses an air conditioner with a heat pump system comprising a variable expansion means with two or three capillary tubes. Capillaries can be bypassed by means of valves. After a predetermined time the compressor speed is detected. When the compressor speed is higher than a predetermined value a first predetermined temperature is selected for a subsequent comparison to a detected temperature. When the compressor speed is not equal to the predetermined value, a second predetermined temperature is selected. Subsequently a temperature detector detects the temperature of the refrigerant discharged from the compressor. When the detected temperature is lower/higher than a predetermined temperature the valve is closed/opened.

It is an object of the present invention to provide a laundry dryer with a heat pump system, which allows different lamination work at the expansion means during a drying cycle in order to improve the performance of the heat pump system.

The object of the present invention is achieved by the laundry dryer with a heat pump system according to claim 1.

According to the present invention the expansion means comprises at least two capillary tubes, wherein at least one of said capillary tubes is switched or switchable by at least one valve, so that the lamination work at said expansion means is adjustable.

The present invention provides that the expansion means are mechanically changeable, so that the lamination work at said expansion means may be adapted to the actual situation of the process in the heat pump system. There are several situations, in which a change of the lamination work at the expansion means would be advantageous. For example, variation of the pressure and/or temperature of the refrigerant, the speed of the compressor and/or the temperature of the air stream. The speed of the compressor may by variable or constant.

For example, the expansion means comprises at least two parallel series of a capillary tube and a corresponding on-off valve in each case, wherein the capillary tubes may have different lengths and/or different cross-sections. In case of same cross-sections the longer capillary tube provides a bigger pressure drop. In case of same lengths the narrower capillary tube provides a bigger pressure drop. The above assuming that the refrigerant flow rate does not change.

According to another example, the expansion means comprises two capillary tubes and a three-way valve, wherein the capillary tubes are alternatingly switchable by the three-way valve. For example, the capillary tubes have different lengths and/or different cross-sections.

According to another example, the expansion means comprises at least two serial capillary tubes, and at least one by-pass on-off valve to by-pass at least one of the capillary tubes. Preferably, the bypass on-off valve is connected in parallel to a first capillary tube or to a second capillary tube.

According to the present invention, at least one of said capillary tubes is switched or switchable by at least one valve in response to temperature/pressure of the refrigerant circuit, wherein the temperature/pressure of the refrigerant circuit is detected at inlet/outlet of the first heat exchanger.

According to an embodiment not forming part of the claimed invention, at least one of said capillary tubes is switched or switchable by at least one valve in response to one of the following:
drying cycle selected by the user,
rotational speed of the compressor,
supply current/voltage frequency of the compressor motor,
current/power absorbed by the compressor,
temperature of the drying air.

Rotational speed of the compressor is the speed of the shaft connected to the device that compresses the refrigerant during the compressor operation, the rotational speed is substantially equals to the rotational speed of the motor.

Supply current/voltage frequency is the frequency of the current/voltage supplied to the compressor motor by the electronic controller to vary the rotational speed of the compressor.

Preferably, the temperature of the drying air is detected at the inlet of the laundry treatment chamber (e.g. rotatable drum).

According to an embodiment not forming part of the claimed invention, the temperature/pressure of the refrigerant circuit is detected at inlet/outlet of the second heat exchanger.

According to an embodiment not forming part of the claimed invention, the temperature/pressure of the refrigerant circuit is detected at inlet/outlet of compressor.

Preferably, the heat pump system comprises a control unit for controlling the lamination work at the expansion means and/or the speed of the compressor.

According to an embodiment not forming part of the claimed invention, an input device for selecting a standard operation mode and an energy saving/night operation mode, wherein the standard operation mode corresponds with a higher speed of the compressor and the energy saving/night operation mode corresponds with a lower speed of the compressor, wherein at least one of said capillary tubes is switched or switchable by at least one valve in response to the operation mode selected.

According to an embodiment not forming part of the claimed invention, a control unit for adapting the lamination work at the expansion means to a warm-up phase and a steady state phase of the heat pump system, wherein at least one of said capillary tubes is switched or switchable by at least one valve during the warm-up phase and/or during the steady state phase.

If the refrigerant operates at least at critical pressure at the high pressure side of the heat pump, then the first heat exchanger is a gas cooler, instead of a condenser.

If the refrigerant operates at least at critical pressure at the low pressure side of the heat pump, then the second heat exchanger is a gas heater, instead of an evaporator.

The novel and inventive features believed to be the characteristic of the present invention are set forth in the appended claims.

The invention will be described in further detail with reference to the drawings, in which
- FIG 1: shows a schematic diagram of a heat pump system for a laundry dryer according to the present invention,
- FIG 2: shows a detailed schematic diagram of expansion means of the heat pump system for the laundry dryer according to a first embodiment of the present invention,
- FIG 3: shows a detailed schematic diagram of expansion means of the heat pump system for the laundry dryer according to a second embodiment of the present invention,
- FIG 4: shows a detailed schematic diagram of expansion means of the heat pump system for the laundry dryer according to a third embodiment of the present invention,
- FIG 5: shows a detailed schematic diagram of expansion means of the heat pump system for the laundry dryer according to a fifth embodiment of the present invention, and
- FIG 6: shows a detailed schematic diagram of expansion means of the heat pump system for the laundry dryer according to a sixth embodiment of the present invention.

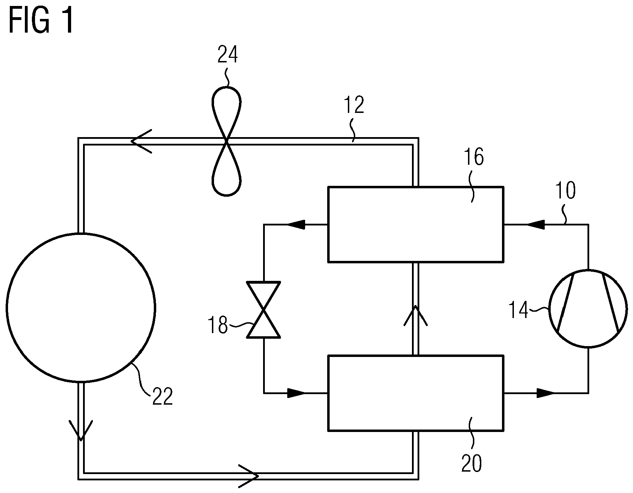

FIG 1 illustrates a schematic diagram of a heat pump system for a laundry dryer according to a first embodiment of the present invention. The heat pump system includes a closed refrigerant circuit 10 and a drying air stream circuit 12.

The refrigerant circuit 10 includes a compressor 14, a first heat exchanger 16, expansion means 18 and a second heat exchanger 20. The compressor 14, the first heat exchanger 16, the expansion means 18 and the second heat exchanger 20 are switched in series and form a closed loop.

The drying air stream circuit 12 includes the first heat exchanger 16, the second heat exchanger 20, a laundry treatment chamber, preferably a rotatable drum 22, and an air stream fan 24. The first heat exchanger 16 and the second heat exchanger 20 form the thermal coupling between the refrigerant circuit 10 and the drying air stream circuit 12.

The drying air stream circuit 12 is preferably a closed loop in which the process air is continuously circulated through the laundry storing chamber. However it may also be provided that a (preferably smaller) portion of the process air is exhausted from the process air loop and fresh air (e.g. ambient air) is taken into the process air loop to replace the exhausted process air. And/or the process air loop is temporally opened (preferably only a short section of the total processing time) to have an open loop discharge.

The refrigerant circuit 10 is subdivided into a high pressure portion and a low pressure portion. The high pressure portion extends from the outlet of the compressor 14 via the first heat exchanger 16 to the inlet of the expansion means 18. The low pressure portion extends from the outlet of the expansion means 18 via the second heat exchanger 20 to the inlet of the compressor 14.

In this example, the first heat exchanger 16 acts as a condenser, and the second heat exchanger 20 acts as an evaporator. However, if the refrigerant operates at least at critical pressure in the high pressure portion of the refrigerant circuit 10, then the first heat exchanger is a gas cooler, instead of a condenser.
If the refrigerant operates at least at critical pressure in the low pressure portion of the refrigerant circuit 10, then the second heat exchanger is a gas heater, instead of an evaporator.

The compressor 14 compresses and heats up the refrigerant. The first heat exchanger 16 cools down the refrigerant in the refrigerant circuit 10 and heats up the drying air stream in the drying air stream circuit 12, before the drying air stream is re-inserted into the laundry drum 26. The expansion means 18 laminates the refrigerant from a higher pressure to a lower pressure. The second heat exchanger 20 cools down and dehumidifies the drying air stream, after said drying air stream has passed the laundry drum 22 in the drying air stream circuit 12. The drying air stream is driven by the air stream fan 24.

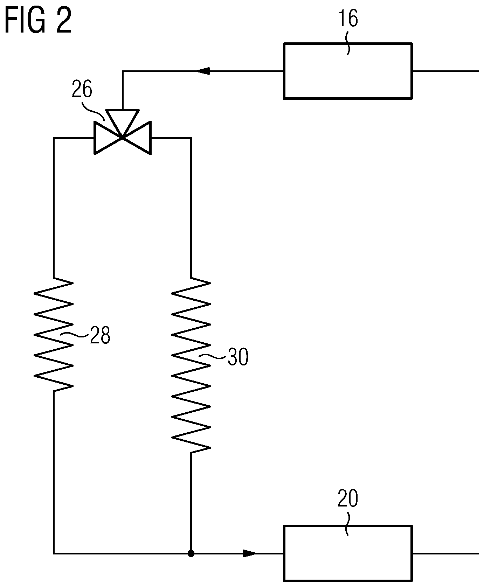

FIG 2 shows a detailed schematic diagram of expansion means 18 of the heat pump system for the laundry dryer according to a first embodiment of the present invention. The expansion means 18 of the first embodiment include a three-way valve 26, a first capillary tube 28 and a second capillary tube 30.

The three-way valve 26 comprises three ports. A first port is connected to the outlet of the first heat exchanger 16. A second port is connected to the inlet of the first capillary tube 28. A third port is connected to the inlet of the second capillary tube 30.

The three-way valve 26 is provided to change over between the first capillary tube 28 and the second capillary tube 30, so that the refrigerant flows either through the first capillary tube 28 or through the second capillary tube 30. The first capillary tube 28 and the second capillary tube 30 have different geometric properties, so that the first capillary tube 28 and the second capillary tube 30 provide different lamination work.

In the example proposed, the lamination work increases with the length of the capillary tubes 28 and 30, assuming that the cross-section of the tubes is the same and the refrigerant flow rate is the same as well. The first capillary tube 28 is shorter than the second capillary tube 30. Thus, the second capillary tube 30 provides higher lamination work than the first capillary tube 28.
However, in a similar manner the lamination work increases with the increasing of the cross-section of the capillary tubes 28 and 30, assuming that the length of the tubes is the same and the refrigerant flow rate is the same as well.

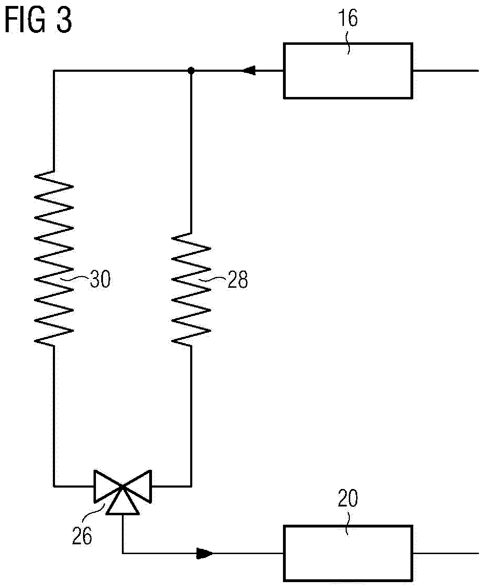

FIG 3 shows a detailed schematic diagram of expansion means 18 of the heat pump system for the laundry dryer according to a second embodiment of the present invention. The expansion means 18 of the second embodiment include the three-way valve 26, the first capillary tube 28 and the second capillary tube 30.

Unlike the first embodiment, the three-way valve 26 is arranged downstream of the first capillary tube 28 and the second capillary tube 30 in the second embodiment of the present invention.

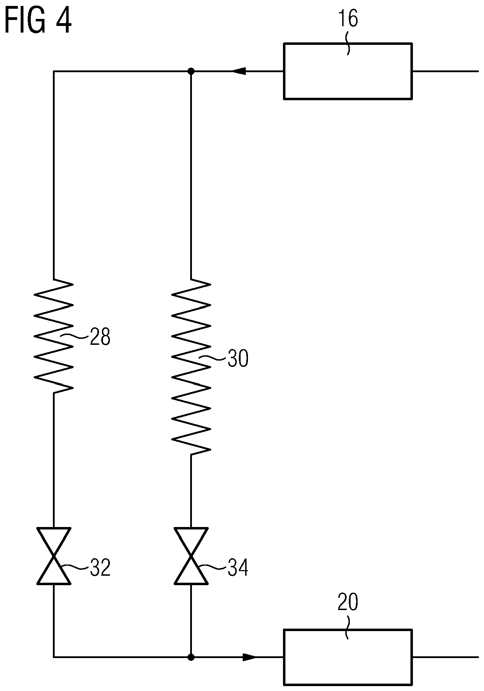

FIG 4 shows a detailed schematic diagram of expansion means 18 of the heat pump system for the laundry dryer according to a third embodiment of the present invention. The expansion means 18 of the third embodiment include the first capillary tube 28, the second capillary tube 30, a first on-off valve 32 and a second on-off valve 34.

The inlets of the first capillary tube 28 and the second capillary tube 30 are connected to the outlet of the first heat exchanger 16. The outlet of the first capillary tube 28 is connected to the inlet of the first on-off valve 32. In a similar way, the outlet of the second capillary tube 30 is connected to the inlet of the second on-off valve 34. Thus, the on-off valves 32 and 34 are arranged downstream the corresponding capillary tubes 28 and 30, respectively. The outlets of the first on-off valve 32 and the second on-off valve 34 are connected to the inlet of the second heat exchanger 20.

The first on-off valve 32 and the second on-off valve 34 are provided to select one of the capillary tubes 28 or 30. The first capillary tube 28 and the second capillary tube 30 have different geometric properties, so that the first capillary tube 28 and second capillary tube 30 provide different lamination works. Since the first capillary tube 28 is shorter than the second capillary tube 30, the second capillary tube 30 provides higher lamination work than the first capillary tube 28 (assuming that the respective cross sections are the same).
Additionally, when both the on-off valve 32, 34 are in open position, the first and second capillary tube 28, 30 provide a cumulative lamination work different from the one generated by the first capillary tune 28 when only the first on-off valve 32 is open and by the second capillary tube 30 when only the second on-off valve 32 is open.

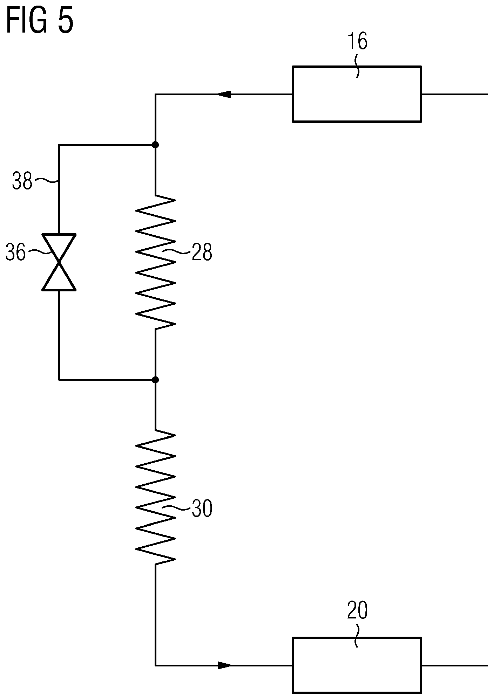

FIG 5 shows a detailed schematic diagram of expansion means 18 of the heat pump system for the laundry dryer according to a fourth embodiment of the present invention. The expansion means 18 of the fourth embodiment include the first capillary tube 28, the second capillary tube 30 and the by-pass on-off valve 36.

The inlet of the first capillary tube 28 is connected to the outlet of the first heat exchanger 16. The inlet of the second capillary tube 30 is connected to the outlet of the first capillary tube 28. The outlet of the second capillary tube 28 is connected to the inlet of the second heat exchanger 20. Thus, the first capillary tube 28 and the second capillary tube 30 are connected in series. The bypass on-off valve 36 is connected in parallel to the first capillary tube 28. Thus, the bypass on-off valve 36 is connected to the outlet of the first heat exchanger 16. Further, the bypass on-off valve 36 is connected to the junction between the first capillary tube 28 and the second capillary tube 30.

Preferably, the bypass on-off valve 36 is provided along a bypass line 38 comprising a bypass line inlet arranged between the inlet of the first capillary tube 28 and the outlet of the first heat exchanger 16 and a bypass line outlet arranged between the outlet of the first capillary tube 28 and inlet of the second capillary tube 30.

When the bypass on-off valve 36 is closed, then the refrigerant flows in the first capillary tube 28 and the second capillary tube 30. When the bypass on-off valve 36 is open, then the first capillary tube 28 is bypassed, and the refrigerant flows only in the second capillary tube 30. When the bypass on-off valve 36 is open, then the lamination work of the expansion means 18 decreases.

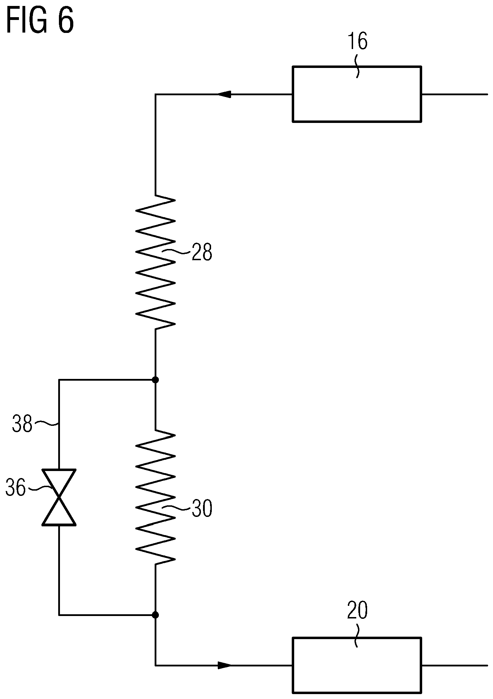

FIG 6 shows a detailed schematic diagram of expansion means 18 of the heat pump system for the laundry dryer according to a fifth embodiment of the present invention. The expansion means 18 of the fifth embodiment include the first capillary tube 28, the second capillary tube 30 and the by-pass on-off valve 36.

The inlet of the first capillary tube 28 is connected to the outlet of the first heat exchanger 16. The inlet of the second capillary tube 30 is connected to the outlet of the first capillary tube 28. The outlet of the second capillary tube 28 is connected to the inlet of the second heat exchanger 20. Thus, the first capillary tube 28 and the second capillary tube 30 are connected in series. The bypass on-off valve 36 is connected in parallel to the second capillary tube 30. Thus, the bypass on-off valve 36 is connected to the junction between the first capillary tube 28 and the second capillary tube 30. Further, the bypass on-off valve 36 is connected to the inlet of the second heat exchanger 16.

Preferably, the bypass on-off valve 36 is provided along a bypass line comprising a bypass line inlet arranged between the outlet of the first capillary tube 28 and the inlet of second capillary tube 30 and a bypass line outlet arranged between the outlet of the second capillary tube 30 and inlet of the second heat exchanger 20.

When the bypass on-off valve 36 is closed, then the refrigerant flows in the first capillary tube 28 and the second capillary tube 30. When the bypass on-off valve 36 is open, then the second capillary tube 30 is bypassed, and the refrigerant flows only in the first capillary tube 28. When the bypass on-off valve 36 is open, then the lamination work of the expansion means 18 decreases.

The embodiments disclosed in figure 5 and 6 can also be combined together so as to provide a first by-pass line 38 associated to the first capillary tune 28 and a second by-pass line 38 associated to the second capillary tune 28. In this manner it is possible to switch on the two capillary tubes on the same time or to switch only the first one or to switch on only the second one, thereby providing different lamination works.

In the above embodiments the expansion means 18 include two capillary tubes 28 and 30 in each case, wherein two different lamination works can be selected. In general, the expansion means 18 may include more capillary tubes 28 and 30 and/or more valves 26, 32, 34 and/o 36, so that more than two different lamination works can be selected.

In particular, the expansion means 18 with different lamination work may be provided for a heat pump system including a compressor 14 with different rotational speed levels. In this case, a certain lamination work at the expansion means 18 is associated with a lower rotational speed level of the compressor 14, whereas, for higher rotational speed level of the compressor 14, the expansion means 18 provide a lamination work which differs from the one associated to lower rotational speed level so that the lamination work can be adapted to compressor running condition.

Preferably, the heat pump system comprises a control unit. The user can select different operation modes of the heat pump system on said control unit. For example, a standard operation mode of the heat pump system corresponds with a relative high rotational speed of the compressor 14. Further, a so-called eco (or night) mode of the heat pump system requires a lower rotational speed of the compressor 14. In dependence of the selection of the user, the control unit activates the corresponding rotational speed of the compressor 14. Further, the control unit controls the valves 26, 32, 34 and/or 36 of the expansion means 18, so that the lamination work at said expansion means 18 is adapted to the rotational speed of the compressor 14.

A further application of the variable expansion means 18 may be an adaption of the pressure drop between a warm-up phase and a steady state phase of the laundry dryer. During the warm-up phase of the laundry dryer, a certain lamination work is advantageous in order to shorten said warm-up phase. When the warm-up phase is over, then the lamination work is adjusted to fit the steady state phase.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention as defined by the appended claims.

### List of reference numerals

- 10: refrigerant circuit
- 12: air stream circuit
- 14: compressor
- 16: first heat exchanger, condenser
- 18: expansion means
- 20: second heat exchanger, evaporator
- 22: laundry drum
- 24: air stream fan
- 26: three-way valve
- 28: first capillary tube
- 30: second capillary tube
- 32: first on-off valve
- 34: second on-off valve
- 36: bypass on-off valve
- 38: bypass on-off line

## Claims

1. A laundry dryer with a heat pump system, said heat pump system comprises a refrigerant circuit (10) for a refrigerant and an air stream circuit (12) for an air stream, wherein
- the refrigerant circuit (10) includes a compressor (14), a first heat exchanger (16), expansion means (18) and a second heat exchanger (20) connected in series and forming a closed loop,
- the air stream circuit (12) includes the first heat exchanger (16), the second heat exchanger (20), a laundry drum (22) and at least one air stream fan (24) connected in series and forming a closed loop,
- the refrigerant circuit (10) and the air stream circuit (12) are thermally coupled by the first heat exchanger (16) and the second heat exchanger (20),
- the first heat exchanger (16) is provided for heating up the air stream and cooling down the refrigerant, and
- the second heat exchanger (20) is provided for cooling down the air stream and heating up the refrigerant,
the expansion means (18) comprises at least two capillary tubes (28, 30), wherein at least one of said capillary tubes (28, 30) is switched or switchable by at least one valve (26; 32, 34; 36), so that the lamination work at said expansion means (18) is adjustable, **characterized in that** at least one of said capillary tubes (28, 30) is switched or switchable by the at least one valve (26; 32, 34; 36) in response to the temperature/pressure of the refrigerant circuit detected at inlet/outlet of the first heat exchanger.

2. The laundry dryer according to claim 1, **characterized in that** the expansion means (18) comprises at least two serial capillary tubes (28, 30), and at least one by-pass on-off valve (36) to by-pass at least one of the capillary tubes (28, 30).

3. The laundry dryer according to claim 2, **characterized in that** the bypass on-off valve (36) is connected in parallel to a first capillary tube (28) or to a second capillary tube (30).

4. The laundry dryer according to claim 2 or 3, **characterized in that** the bypass on-off valve (36) is provided along a bypass line (38) comprising a bypass line inlet arranged between the inlet of a first capillary tube (28) and the outlet of the first heat exchanger (16) and a bypass line outlet arranged between the outlet of the first capillary tube (28) and inlet of a second capillary tube (30).

5. The laundry dryer according to claim 2 or 3, **characterized in that** the bypass on-off valve (36) is provided along a bypass line comprising a bypass line inlet arranged between the outlet of the a first capillary tube (28) and the inlet of a second capillary tube (30) and a bypass line outlet arranged between the outlet of the second capillary tube (30) and inlet of the second heat exchanger (20).

6. The laundry dryer according to claim 1, **characterized in that** the expansion means (18) comprises at least two parallel series of a capillary tube (28, 30) and a corresponding on-off valve (32, 34) in each case.

7. The laundry dryer according to claim 6, **characterized in that** the on-off valves (32, 34) are arranged downstream the corresponding capillary tubes (28, 30), respectively.

8. The laundry dryer according to claim 1, **characterized in that** the expansion means (18) comprises two capillary tubes (28, 30) and a three-way valve (26), wherein the capillary tubes (28, 30) are alternatingly switchable by the three-way valve (26).

9. The laundry dryer according to claim 8, **characterized in that** the three-way valve (26) is arranged downstream of the two first capillary tubes (28, 30).

10. The laundry dryer according to any one of the preceding claims, **characterized in that** the capillary tubes (28, 30) have different lengths and/or different cross-sections.

11. The laundry dryer according to any one of the preceding claims, **characterized in that** the capillary tubes (28, 30) have the same lengths and cross-sections.

12. The laundry dryer according to any one of the preceding claims, **characterized by** comprising a control unit for controlling the lamination work at the expansion means (18) and/or a speed of the compressor (14).

## Patentansprüche

1. Wäschetrockner mit einem Wärmepumpensystem, wobei das Wärmepumpensystem einen Kühlmittelkreislauf (10) für ein Kühlmittel und einen Luftstromkreislauf (12) für einen Luftstrom umfasst, wobei
- der Kühlmittelkreislauf (10) einen Verdichter (14), einen ersten Wärmetauscher (16), eine Expansionseinrichtung (18) und einen zweiten Wärmetauscher (20) umfasst, die in Reihe geschaltet sind und einen geschlossenen Kreislauf ausbilden,
- der Luftstromkreislauf (12) den ersten Wärmetauscher (16), den zweiten Wärmetauscher (20), eine Wäschetrommel (22) und mindestens ein Luftstromgebläse (24) umfasst, die in Reihe geschaltet sind und einen geschlossenen Kreislauf ausbilden,
- der Kühlmittelkreislauf (10) und der Luftstromkreislauf (12) über den ersten Wärmetauscher (16) und den zweiten Wärmetauscher (20) thermisch gekoppelt sind,
- der erste Wärmetauscher (16) zum Erwärmen des Luftstroms und Abkühlen des Kühlmittels vorgesehen ist und
- der zweite Wärmetauscher (20) zum Abkühlen des Luftstroms und Erwärmen des Kühlmittels vorgesehen ist,
wobei die Expansionseinrichtung (18) mindestens zwei Kapillarrohre (28, 30) umfasst, wobei mindestens eins der Kapillarrohre (28, 30) von mindestens einem Ventil (26; 32, 34; 36) geschaltet wird oder schaltbar ist, sodass die Laminierung an der Expansionseinrichtung (18) einstellbar ist,
**dadurch gekennzeichnet, dass** mindestens eins der Kapillarrohre (28, 30) als Reaktion auf die/den am Einlass/Auslass des ersten Wärmetauschers erfasste/n Temperatur/Druck des Kühlmittelkreislaufs von dem mindestens einen Ventil (26; 32, 34; 36) geschaltet wird oder schaltbar ist.

2. Wäschetrockner nach Anspruch 1, **dadurch gekennzeichnet, dass** die Expansionseinrichtung (18) mindestens zwei in Reihe angeordnete Kapillarrohre (28, 30) und mindestens ein Bypassschaltventil (36) umfasst, um mindestens eins der Kapillarrohre (28, 30) zu umgehen.

3. Wäschetrockner nach Anspruch 2, **dadurch gekennzeichnet, dass** das Bypassschaltventil (36) mit einem ersten Kapillarrohr (28) oder einem zweiten Kapillarrohr (30) parallel verbunden ist.

4. Wäschetrockner nach Anspruch 2 oder 3, **dadurch gekennzeichnet, dass** das Bypassschaltventil (36) entlang einer Bypassleitung (38) vorgesehen ist, die einen Bypassleitungseinlass, der zwischen dem Einlass eines ersten Kapillarrohrs (28) und dem Auslass des ersten Wärmetauschers (16) angeordnet ist, und einen Bypassleitungsauslass, der zwischen dem Auslass des ersten Kapillarrohrs (28) und einem Einlass eines zweiten Kapillarrohrs (30) angeordnet ist, umfasst.

5. Wäschetrockner nach Anspruch 2 oder 3, **dadurch gekennzeichnet, dass** das Bypassschaltventil (36) entlang einer Bypassleitung vorgesehen ist, die einen Bypassleitungseinlass, der zwischen dem Auslass eines ersten Kapillarrohrs (28) und dem Einlass eines zweiten Kapillarrohrs (30) angeordnet ist, und einen Bypassleitungsauslass, der zwischen dem Auslass des zweiten Kapillarrohrs (30) und dem Einlass des zweiten Wärmetauschers (20) angeordnet ist, umfasst.

6. Wäschetrockner nach Anspruch 1, **dadurch gekennzeichnet, dass** die Expansionseinrichtung (18) mindestens zwei parallele Reihen von Kapillarrohren (28, 30) und jeweils ein zugehöriges Schaltventil (32, 34) umfasst.

7. Wäschetrockner nach Anspruch 6, **dadurch gekennzeichnet, dass** die Schaltventile (32, 34) jeweils nach den zugehörigen Kapillarrohren (28, 30) angeordnet sind.

8. Wäschetrockner nach Anspruch 1, **dadurch gekennzeichnet, dass** die Expansionseinrichtung (18) zwei Kapillarrohre (28, 30) und ein Dreiwegeventil (26) umfasst, wobei die Kapillarrohre (28, 30) mittels des Dreiwegeventils (26) abwechselnd schaltbar sind.

9. Wäschetrockner nach Anspruch 8, **dadurch gekennzeichnet, dass** das Dreiwegeventil (26) nach den zwei ersten Kapillarrohren (28, 30) angeordnet ist.

10. Wäschetrockner nach einem der vorstehenden Ansprüche, **dadurch gekennzeichnet, dass** die Kapillarrohre (28, 30) unterschiedliche Längen und/oder unterschiedliche Querschnitte aufweisen.

11. Wäschetrockner nach einem der vorstehenden Ansprüche, **dadurch gekennzeichnet, dass** die Kapillarrohre (28, 30) dieselbe Länge und denselben Querschnitt aufweisen.

12. Wäschetrockner nach einem der vorstehenden Ansprüche, **gekennzeichnet durch** das Umfassen einer Steuereinheit zur Steuerung der Laminierung an der Expansionseinrichtung (18) und/oder der Drehzahl des Verdichters (14).

## Revendications

1. Sèche-linge avec un système de pompe à chaleur, ledit système de pompe à chaleur comprenant un circuit de réfrigérant (10) pour un réfrigérant et un circuit de courant d'air (12) pour un courant d'air,
- le circuit de réfrigérant (10) incluant un compresseur (14), un premier échangeur de chaleur (16), un moyen d'expansion (18) et un deuxième échangeur de chaleur (20) connectés en série et formant une boucle fermée,
- le circuit de courant d'air (12) incluant le premier échangeur de chaleur (16), le deuxième échangeur de chaleur (20), un tambour à linge (22) et au moins un ventilateur de courant d'air (24) connectés en série et formant une boucle fermée,
- le circuit de réfrigérant (10) et le circuit de courant d'air (12) étant couplés thermiquement par le premier échangeur de chaleur (16) et le deuxième échangeur de chaleur (20),
- le premier échangeur de chaleur (16) étant disposé pour chauffer le courant d'air et refroidir le réfrigérant, et
- le deuxième échangeur de chaleur (20) étant disposé pour refroidir le courant d'air et chauffer le réfrigérant,
le moyen d'expansion (18) comprenant au moins deux tubes capillaires (28, 30), au moins un desdits tubes capillaires (28, 30) étant commuté ou commutable par au moins une vanne (26 ; 32, 34 ; 36), de telle sorte que le travail de laminage au niveau dudit moyen d'expansion (18) soit ajustable,
**caractérisé en ce que**
au moins un desdits tubes capillaires (28, 30) est commuté ou commutable par ladite au moins une vanne (26 ; 32, 34 ; 36) en réponse à la température/pression du circuit de réfrigérant détectée au niveau d'une entrée/sortie du premier échangeur de chaleur.

2. Séchoir à linge selon la revendication 1, **caractérisé en ce que** le moyen d'expansion (18) comprend au moins deux tubes capillaires en série (28, 30), et au moins une vanne de marche-arrêt de contournement (36) pour contourner au moins un des tubes capillaires (28, 30).

3. Sèche-linge selon la revendication 2, **caractérisé en ce que** la vanne de marche-arrêt de contournement (36) est connectée en parallèle à un premier tube capillaire (28) ou à un deuxième tube capillaire (30).

4. Sèche-linge selon la revendication 2 ou 3, **caractérisé en ce que** la vanne de marche-arrêt de contournement (36) est disposée le long d'une conduite de contournement (38) comprenant une entrée de conduite de contournement agencée entre l'entrée d'un premier tube capillaire (28) et la sortie du premier échangeur de chaleur (16) et une sortie de conduite de contournement agencée entre la sortie du premier tube capillaire (28) et l'entrée d'un deuxième tube capillaire (30).

5. Sèche-linge selon la revendication 2 ou 3, **caractérisé en ce que** la vanne de marche-arrêt de contournement (36) est disposée le long d'une conduite de contournement comprenant une entrée de conduite de contournement agencée entre la sortie d'un premier tube capillaire (28) et l'entrée d'un deuxième tube capillaire (30) et une sortie de conduite de contournement agencée entre la sortie du deuxième tube capillaire (30) et l'entrée du deuxième échangeur de chaleur (20).

6. Sèche-linge selon la revendication 1, **caractérisé en ce que** le moyen d'expansion (18) comprend au moins deux séries parallèles d'un tube capillaire (28, 30) et d'une vanne de marche-arrêt correspondante (32, 34) dans chaque cas.

7. Sèche-linge selon la revendication 6, **caractérisé en ce que** les vannes de marche-arrêt (32, 34) sont agencées en aval des tubes capillaires correspondants (28, 30), respectivement.

8. Sèche-linge selon la revendication 1, **caractérisé en ce que** le moyen d'expansion (18) comprend deux tubes capillaires (28, 30) et une vanne à trois voies (26), les tubes capillaires (28, 30) étant commutables en alternance par la vanne à trois voies (26).

9. Sèche-linge selon la revendication 8, **caractérisé en ce que** la vanne à trois voies (26) est agencée en aval des deux premiers tubes capillaires (28, 30).

10. Sèche-linge selon l'une quelconque des revendications précédentes, **caractérisé en ce que** les tubes capillaires (28, 30) ont différentes longueurs et/ou différentes sections transversales.

11. Sèche-linge selon l'une quelconque des revendications précédentes, **caractérisé en ce que** les tubes capillaires (28, 30) sont les mêmes longueurs et sections transversales.

12. Sèche-linge selon l'une quelconque des revendications précédentes, **caractérisé en ce qu'**il comprend une unité de contrôle pour contrôler le travail de laminage au niveau du moyen d'expansion (18) et/ou une vitesse du compresseur (14).
